# EUROPÄISCHE PATENTANMELDUNG

(11) **EP 1 516 804 A2**
(43) Veröffentlichungstag der Anmeldung: **23.03.2005**
(21) Anmeldenummer: 04014418.0
(22) Anmeldetag: 19.06.2004
(51) Int. Cl.: B62D 27/06

(54) **Lösbare Verbindung zwischen zwei angrenzenden Bauteilen, insbesondere Aussenhautteilen einer Fahrzeugkarosserie**

(30) Priorität: 19.09.2003 DE 10343381
(71) Anmelder: Dr.Ing. h.c.F. Porsche Aktiengesellschaft, 70435 Stuttgart (DE)
(72) Erfinder: Pfister, Klaus, 75433 Maulbronn (DE); Danev, Dimitar, 71272 Renningen (DE)

(57) **Zusammenfassung**

Zwischen zwei angrenzenden Bauteilen, insbesondere Außenhautteilen einer Fahrzeugkarosserie ist eine lösbare Verbindung vorgesehen. Eine eine exakte Positionierung beider Teile sowie eine schnelle und einfache Montage gewährleistende lösbare Verbindung ohne zusätzliche Werkzeuge wird dadurch geschaffen, dass die lösbare Verbindung durch eine beide Flansche gegeneinander verspannende Klemmverbindung gebildet wird, die zumindest ein plattenförmiges Befestigungselement und eine schieberartige federnde Klammer umfasst.

## Beschreibung

Die Erfindung betrifft eine lösbare Verbindung zwischen zwei angrenzenden Bauteilen, insbesondere Außenhautteilen einer Fahrzeugkarosserie gem. dem Oberbegriff des Patentanspruchs 1.

Es ist im Fahrzeugbau allgemein bekannt, angrenzende Bauteile, insbesondere Außenhautteile einer Fahrzeugkarosserie durch Schweißen miteinander zu verbinden.

Ferner ist es aus der DE-PS 1 277 042 bekannt, angrenzende Außenhautteile einer Fahrzeugkarosserie lösbar miteinander zu verbinden. Hierzu ist an einem Bauteil eine mit einem Innengewinde versehene Schweißmutter vorgesehen, in die eine mit dem anderen Bauteil verbundene Schraube eindrehbar ist. Um ein Verdrehen beider Bauteile gegeneinander beim Befestigen zu verhindern, müssen mehrere mit Abstand zueinander angeordnete Schraubbefestigungen vorgesehen werden.

Aus der noch nicht veröffentlichten deutschen Patentanmeldung 102 42 787.9-12 geht eine lösbare Verbindung zwischen zwei angrenzenden Bauteilen, insbesondere Außenhautteilen einer Kraftfahrzeugkarosserie hervor, die entlang einer Fuge aneinandergesetzt und im gemeinsamen Verbindungsbereich mit abgestellten örtlich aneinanderliegenden Flanschen versehen sind, wobei beide Bauteile durch eine Art Bajonettverschluss miteinander verbunden sind. Zum radialen Verdrehen eines Hülsenteiles des Bayonettverschlusses ist bei dieser Anordnung ein Hilfswerkzeug erforderlich.

Aufgabe der Erfindung ist es, eine lösbare Verbindung zwischen zwei angrenzenden Bauteilen, insbesondere Außenhautteilen einer Fahrzeugkarosserie so weiterzubilden, dass einerseits eine exakte Positionierung beider Teile zueinander mit einer gleichbleibenden Fuge erzielt wird und dass andererseits eine schnelle und einfache Montage beider Bauteile in einem schwer zugänglichen Bereich ohne Zusatzwerkzeuge gewährleistet ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die erfindungsgemäße lösbare Verbindung der Montageaufwand, insbesondere die Montagezeit deutlich verringert wird und dass kein zusätzliches Werkzeug benötigt wird. Die vorgesehene Klemmverbindung zwischen beiden Flanschen umfasst ein vormontiertes plattenförmiges Befestigungselement und eine schieberartige federnde Klammer. Ein Kopfabschnitt des plattenförmigen Befestigungselementes stützt sich an einem der beiden Bauteile ab und weist zumindest einen durch Öffnungen beider Flansche hindurchgeführten Halteabschnitt auf, der beide Flansche in Querrichtung überragt und mit etwa parallel zur Längserstreckung der Flansche ausgerichteten Rastnuten versehen ist, in die von der Seite her die federnde Klammer in Einschubrichtung eingesetzt ist.

In der Zeichnung wird ein Ausführungsbeispiel der Erfindung näher erläutert.

Es zeigt
- Fig. 1: eine perspektivische Ansicht von schräg vorne auf einen vorderen Endbereich eines Personenkraftwagens,

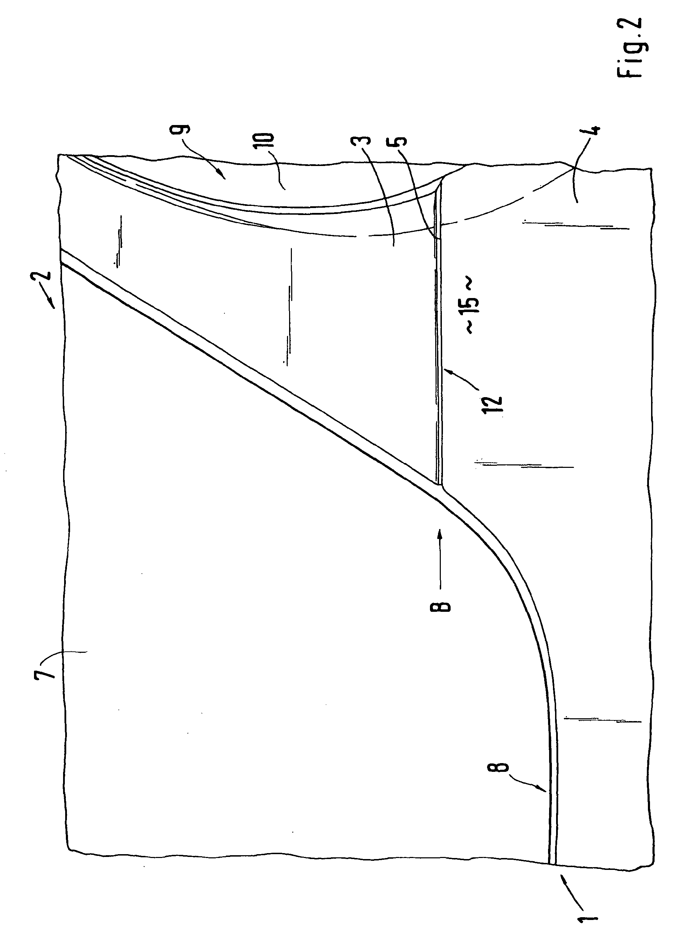

- Fig. 2: eine Einzelheit X der Fig. 1 in der Draufsicht gesehen und in größerer Darstellung,

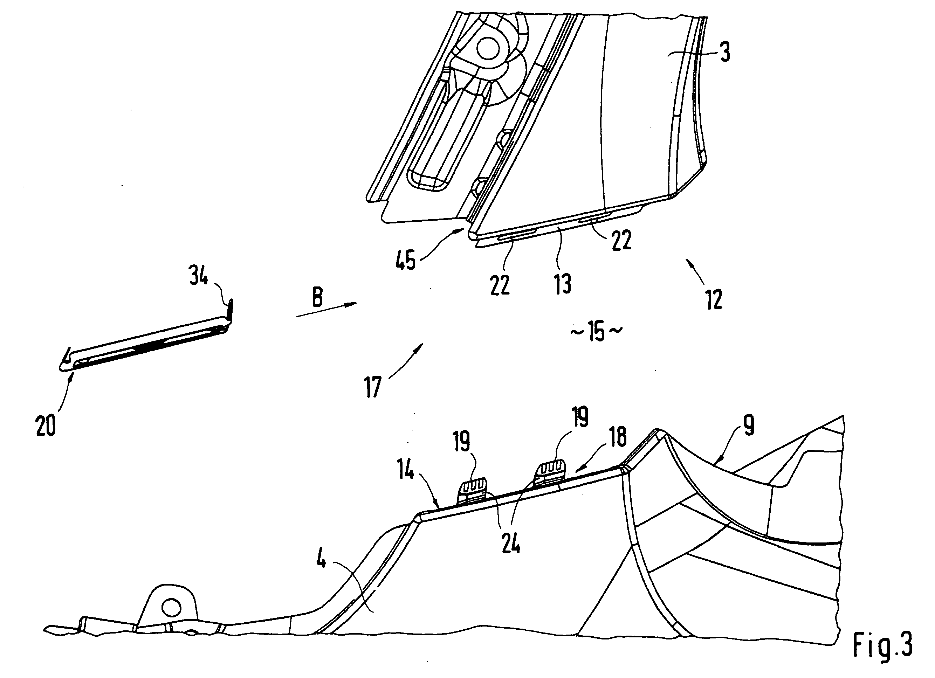

- Fig. 3: in Explosionsdarstellung die beiden zu verbindenden Außenhautteile von außen gesehen und Bauteile der lösbaren Verbindung,
- Fig. 4: in Explosionsdarstellung eine Ansicht von innen auf die beiden zu verbindenden Außenhautteile sowie auf Bauteile der lösbaren Verbindung,
- Fig. 5: eine Ansicht von innen auf die lösbare Verbindung,
- Fig. 6: einen Schnitt nach der Linie VI-VI der Fig. 5,

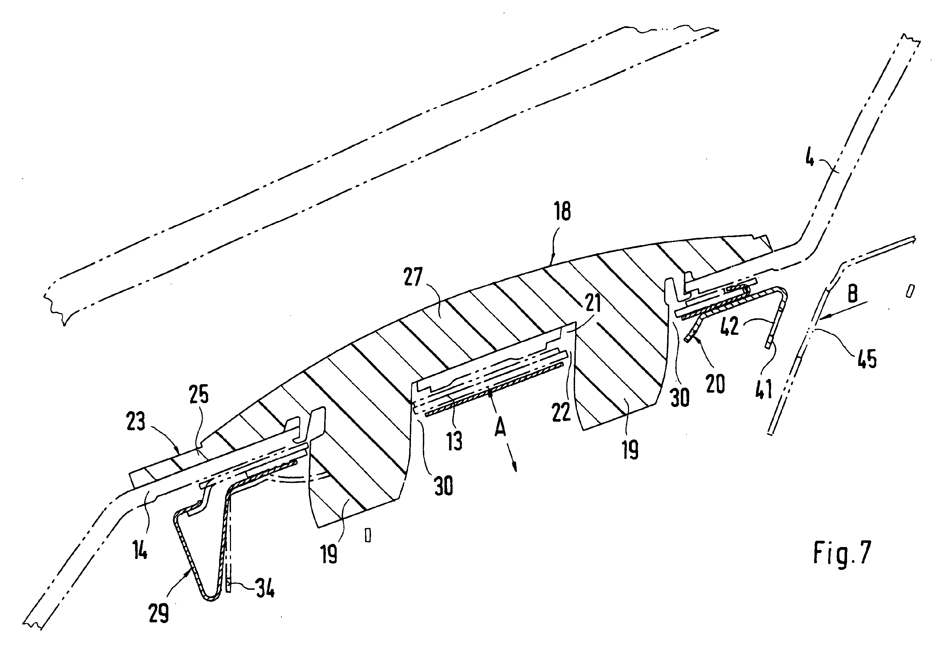

- Fig. 7: einen Schnitt nach der Linie VII-VII der Fig. 6,
- Fig. 8: eine perspektivische Ansicht auf das plattenförmige Befestigungselement,
- Fig. 9: eine Draufsicht auf das plattenförmige Befestigungselement,
- Fig. 10: eine perspektivische Ansicht auf eine die federnde Klammer aufnehmende Führungsschiene.

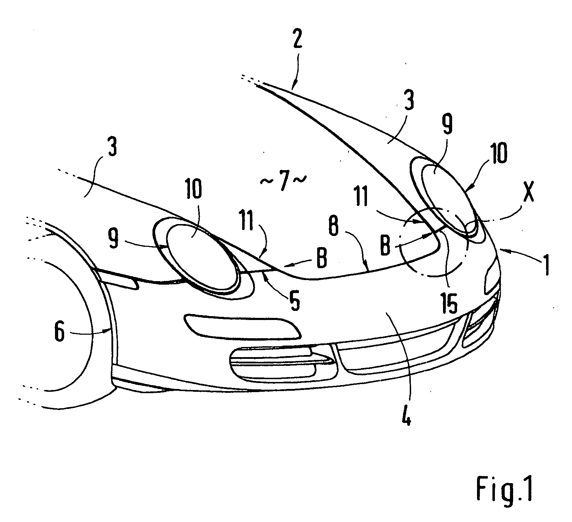

In Fig. 1 ist der bugseitige Endbereich 1 eines Personenkraftwagens 2 dargestellt, wobei angrenzende Bauteile 3, 4 der Fahrzeugkarosserie entlang einer Fuge 5 aneinandergesetzt sind. Die Bauteile 3, 4 werden durch Außenhautteile des Personenkraftwagens 2 gebildet.

Im Ausführungsbeispiel wird das erste Bauteil 3 durch einen aufbaüseitig feststehenden vorderen Kotflügel gebildet, wogen das zweite Bauteil 4 durch eine querverlaufende Bugverkleidung gebildet wird, die an beiden Längsseiten an angrenzende Radhäuser 6 herangeführt ist. Der Kotflügel wird vorzugsweise durch ein Blechpressteil gebildet, wogegen die elastische Bugverkleidung aus einem geeigneten Kunststoff gefertigt ist.

Zwischen den beiden seitlich außenliegenden längsgerichteten Kotflügeln erstreckt sich eine vordere schwenkbare Klappe 7, die mit einem vorderen Randbereich 8 unter Bildung eines Spaltes an den oberen Rand der Bugverkleidung heranragt. An beiden Kotflügeln und angrenzenden Abschnitten der Bugverkleidung sind jeweils Ausnehmungen 9 vorgesehen, in die Scheinwerfer 10 eingesetzt sind.

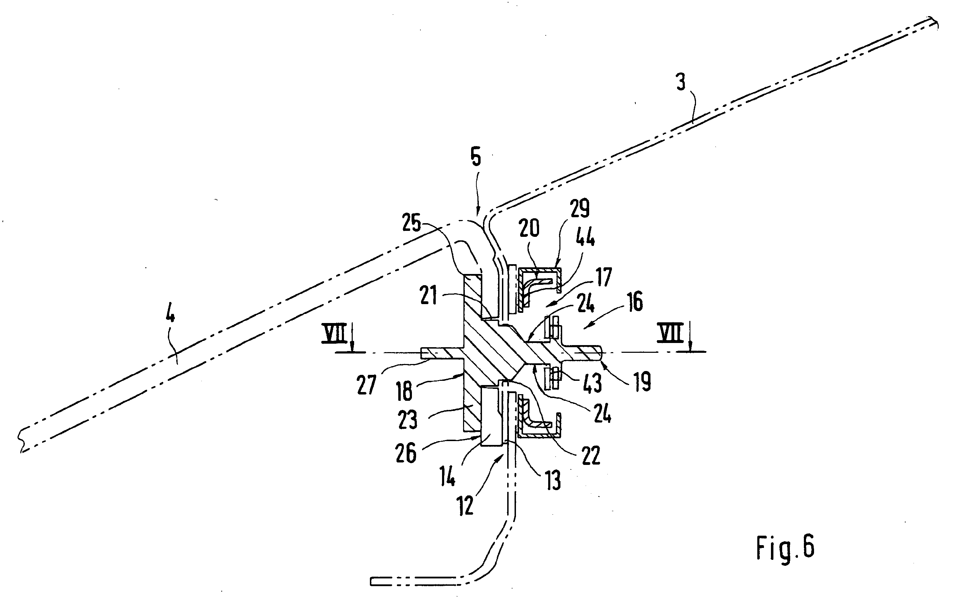

Die Fuge 5 zwischen den Bauteilen 3, 4 erstreckt sich auf jeder Fahrzeuglängsseite zwischen dem äußeren Rand 11 der Klappe 7 und dem Radhaus 6, wobei die Fuge 5 durch den eingesetzten Scheinwerfer 10 in zwei getrennte Abschnitte unterteilt ist. Entlang der Fuge 5 sind beide Bauteile 3, 4 in einem gemeinsamen Verbindungsbereich 12 mit abgestellten, örtlich aneinander liegenden Flanschen 13, 14 versehen. Der Flansch 13 ist dem Bauteil 3 und der Flansch 14 dem Bauteil 4 zugeordnet. Jeder der beiden Flansche 13, 14 kann ein- oder mehrlagig ausgebildet sein. Im Ausführungsbeispiel ist der Flansch 14 einlagig und der Flansch 13 zweilagig ausgebildet (Fig. 6).

Im relativ schmalen, schwer zugänglichen, zwischen Scheinwerfer 10 und Klappe 7 liegenden Bereich 15 ist zwischen den angrenzenden Bauteilen 3, 4 eine lösbare Verbindung 16 vorgesehen, die durch eine zwischen den Bauteilen 13, 14 wirksame Klemmverbindung 17 gebildet wird.

Die Klemmverbindung 17 zwischen den beiden Flanschen 13, 14 umfasst zumindest ein plattenförmiges Befestigungselement 18 mit wenigstens einem vorstehenden Halteabschnitt 19 und einem mit dem Befestigungselement 18 in Wirkverbindung stehende federnde Klammer 20. Der wenigstens eine Halteabschnitt 19 ist zumindest durch Öffnungen 21, 22 beider Flansche 13, 14 hindurchgeführt und überragt die beiden Flansche 13, 14 in Querrichtung gesehen um ein Maß A. Auf der einem Kopfabschnitt 23 gegenüberliegenden Seite des Befestigungselementes 18 ist die federnde Klammer 20 von der Seite her in Rastnuten 24 des zumindest einen vorstehenden Halteabschnitts 19 einschiebbar.

Der Kopfabschnitt 23 des Befestigungselementes 18 wird durch eine in Höhenrichtung gesehen relativ schmale langgestreckte Grundplatte 25 gebildet, die seitlich an die freie Anlagefläche 26 des Flansches 14 eines der beiden Bauteile z.B. 4 herangeführt ist und sich dort abstützt. Die Grundplatte 25 ist in der Draufsicht gesehen etwa viereckförmig ausgebildet. Zur Versteifung der Grundplatte 25 können an dieser örtlich längs- und/oder querverlaufende Rippen vorgesehen sein. In Fig. 6 ist eine sich in Längsrichtung der Grundplatte 25 erstreckende bogenförmige Rippe 27 dargestellt. Vom Kopfabschnitt 23 der Grundplatte 25 sind vorzugsweise zwei mit Abstand zueinander angeordnete Halteabschnitte 19 weggeführt, die etwa rechtwinkelig zur Höhenerstreckung der Flansche 13, 14 ausgerichtet sind. In der Draufsicht gesehen verlaufen die Halteabschnitte 19 entweder rechtwinkelig oder unter einem Winkel zur Längserstreckung der Flansche 13, 14. Im Ausführungsbeispiel ist das plattenförmige Befestigungselement 18 am Bauteil 4, also an der Bugverkleidung vormontiert. Es könnte jedoch auch am anderen Bauteil 3 vormontiert sein. Die Vormontage erfolgt durch Nieten, Klipsen, Kleben oder dgl.. Die von der Grundplatte 25 abragenden Halteabschnitte 19 weisen einen profilierten, vorzugsweise nicht kreisförmigen Querschnitt auf. Um bei mehreren beabstandeten Halteabschnitten 19 ein definiertes Einschieben der federnden Klammer 20 ohne Sichtkontakt auf sämtliche Halteabschnitte 19 zu gewährleisten, ist am Flansch 13 des anderen Bauteils 3 eine längliche profilierte Führungsschiene 29 vorgesehen, in die die federnde Klammer 20 einschiebbar ist. Die vorzugsweise aus Metall gefertigte Führungsschiene 29 ist etwa C-förmig profiliert und weist zumindest eine Öffnung 30 zum Hindurchführen des zumindest einen Halteabschnitts 19 des Befestigungselementes 18 auf.

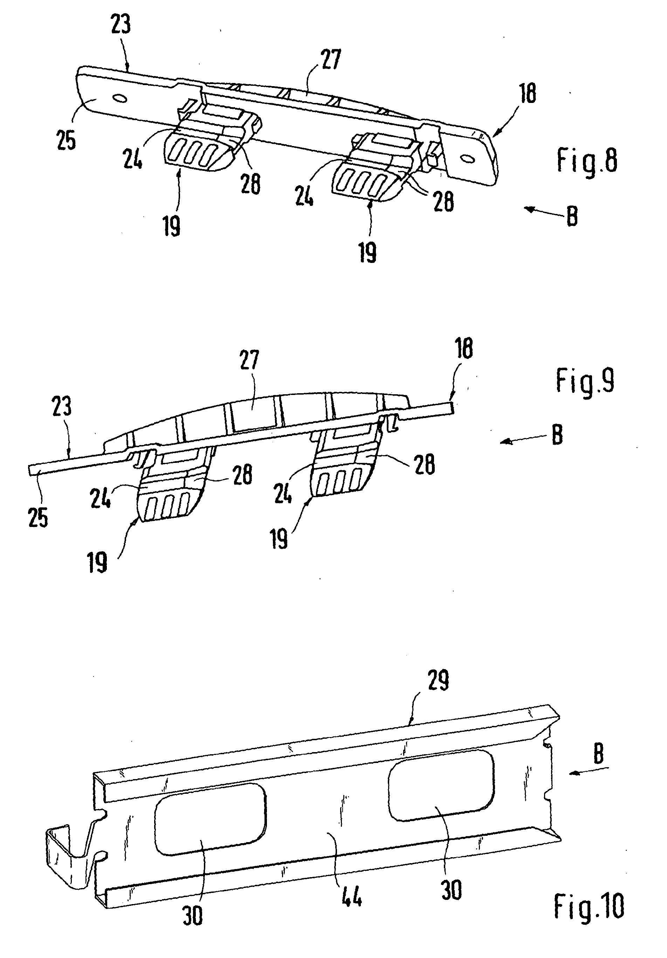

Die Führungsschiene 29 ist vorzugsweise ebenfalls an einem der beiden zu verbindenden Bauteile, z.B. 3 vormontiert und zwar am jeweils anderen Bauteil, an dem das Befestigungselement 18 in Lage gehalten ist. Die Führungsschiene 29 ist im Ausführungsbeispiel durch Klipsen, Aufstecken, Punktschweißen oder dgl. mit dem Flansch 13 des Bauteils 3 verbunden und zumindest in Einschubrichtung B gesehen offen ausgebildet (Fig. 10).

An beiden Halteabschnitten 19 des Befestigungselementes 18 sind an der Oberseite und an der Unterseite jeweils profilierte Rastnuten 24 ausgebildet, die etwa parallel zur Grundplatte 25 der Flansche 13, 14 bzw. zur Längserstreckung verlaufen. Die Rastnuten 24 können sich in der Draufsicht gesehen in Einschubrichtung B hin verjüngen oder einen sich erweiternden Einführabschnitt 28 aufweisen (Fig. 8 u. 9). Die Einschubrichtung B der federnden Klammer 20 verläuft etwa parallel zur Fuge 5 und zwar von der Seite der Klappe 7 her in Richtung Scheinwerfer 10. Hierzu ist ein weiterer Flansch des Kotflügels örtlich mit einer Aussparung 45 versehen. Die federnde Klammer 20 umfasst ein formsteifes äußeres Rahmenteil 31 und einen inneren federnden Klemmbügel 32. Der Klemmbügel 32 ist mit seinem einen Ende 33 mit dem äußeren Rahmenteil 31 verbunden. Von diesem Verbindungsbereich ist ferner ein Einführbügel 34 weggeführt.

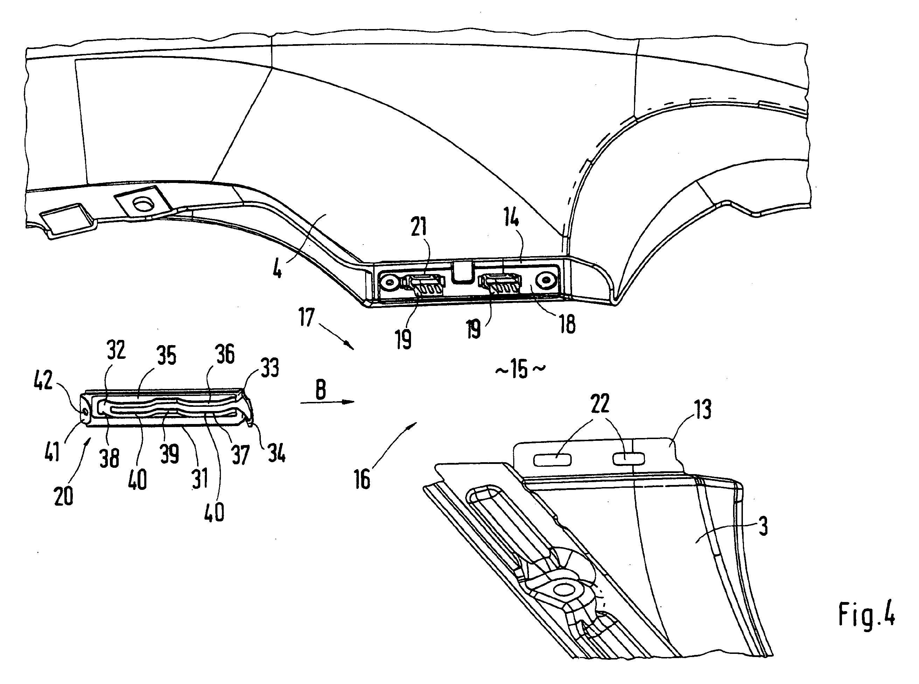

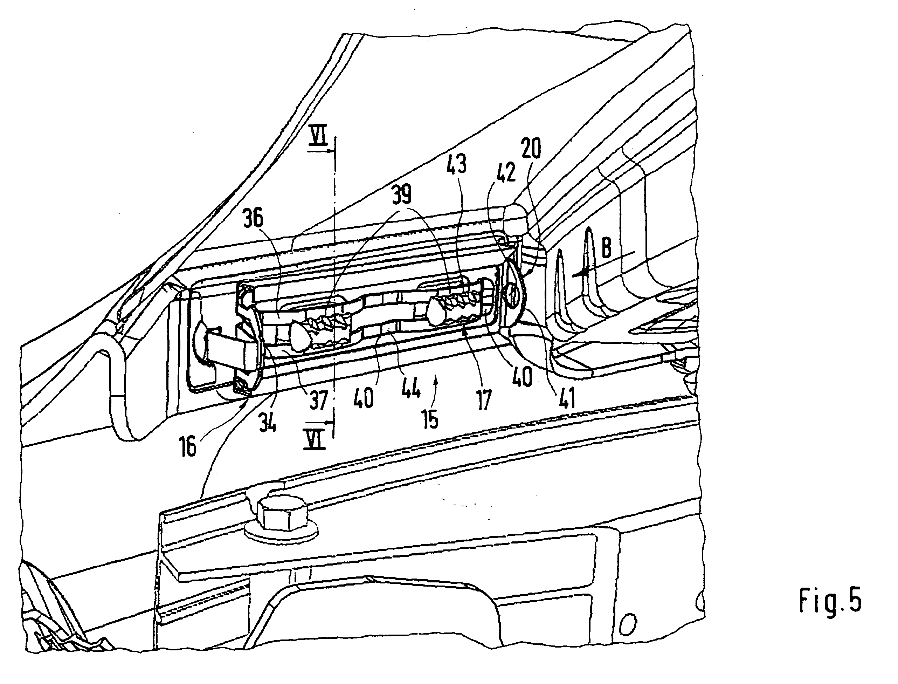

Zwischen dem äußeren etwa winkelförmig profilierten Rahmenteil 31 und dem inneren Klemmbügel 32 ist in der Draufsicht gesehen ein U-förmiger Freischnitt 35 vorgesehen. Der Einführbügel 34 verhindert ein seitliches Aufspreitzen der Klammer 20 (Fig. 4 und 5).

Der innere federnde Klemmbügel 32 ist in der Draufsicht gesehen etwa U-förmig ausgebildet und umfasst zwei langgestreckte mit Abstand zueinander angeordnete schmale Stege 36, 37, die an ihrem freien Ende über einen querverlaufenden Verbindungssteg 38 miteinander verbunden sind. An beiden beabstandeten Stegen 36, 37 und am querverlaufenden Verbindungssteg 38 des Klemmbügels 32 sind abgestellte Abstützbereiche 39, 40 ausgebildet, so dass sich die Klammer 20 abwechselnd an einem seitlichen Rand 43 der Rastnuten 24 und an der Innenseite 44 der Führungsschiene 29 unter Vorspannung abstützt. Auf der dem Einführbügel 34 abgekehrten Seite der Klammer 20 ist ein abgestellter Wandabschnitt 41 mit einer Demontageöffnung 42 vorgesehen.

## Patentansprüche

1. Lösbare Verbindung zwischen zwei angrenzenden Bauteilen, insbesondere Außenhautteilen einer Kraftfahrzeugkarosserie, die entlang einer Fuge aneinandergesetzt und im gemeinsamen Verbindungsbereich mit abgestellten, örtlich aneinanderliegenden Flanschen versehen sind, **dadurch gekennzeichnet, dass** die lösbare Verbindung (16) durch eine beide Flansche (13, 14) gegeneinander verspannende Klemmverbindung (17) gebildet wird, die zumindest ein plattenförmiges Befestigungselement (18) mit einer schieberartigen federnden Klammer (20) umfasst, wobei sich ein Kopfabschnitt (23) des plattenförmigen Befestigungselementes (18) an einem der beiden Bauteile z.B. (4) abstützt und das Befestigungselement (18) zumindest einen durch Öffnungen (21, 22) beider Flansche (13, 14) hindurchgeführten Halteabschnitt (19) aufweist, der beide Flansche (13, 14) überragt und mit etwa parallel zur Längserstreckung der Flansche (13, 14) ausgerichteten Rastnuten (24) versehen ist, in die von der Seite her die federnde Klammer (20) in Einschubrichtung (B) eingesetzt ist.

2. Lösbare Verbindung nach Anspruch 1, **dadurch gekennzeichnet, dass** der Kopfabschnitt (23) des Befestigungselementes (18) durch eine schmale langgestreckte Grundplatte (25) gebildet wird, die seitlich an die freie Anlagefläche (26) des Flansches (14) eines der beiden Bauteile z.B. (4) herangeführt ist und sich dort abstützt.

3. Lösbare Verbindung nach Anspruch 2, **dadurch gekennzeichnet, dass** von der Grundplatte (25) vorzugsweise zwei mit Abstand zueinander angeordnete Halteabschnitte (19) weggeführt sind.

4. Lösbare Verbindung nach den Ansprüchen 2 und 3, **dadurch gekennzeichnet, dass** die Halteabschnitte (19) etwa rechtwinkelig zur Höhenerstreckung der Flansche (13, 14) ausgerichtet sind.

5. Lösbare Verbindung nach einem der vorhergehenden Ansprüche, **dadurch gekennzeichnet, dass** das plattenförmige Befestigungselement (18) an einem der beiden zu verbindenden Bauteile z.B. (4) vormontiert ist.

6. Lösbare Verbindung nach Anspruch 5, **dadurch gekennzeichnet, dass** die langgestreckte Grundplatte (25) durch Niete, Klipse oder dgl. am Flansch (14) des Bauteils (4) in Lage gehalten ist.

7. Lösbare Verbindung nach einem der vorhergehenden Ansprüche, **dadurch gekennzeichnet, dass** zum definierten Einschieben der federnden Klammer (20) am Flansch (13) des Bauteils z.B. (3) eine längliche profilierte Führungsschiene (29) vorgesehen ist, die die federnde Klammer (20) aufnimmt.

8. Lösbare Verbindung nach Anspruch 7, **dadurch gekennzeichnet, dass** die Führungsschiene (29) C-förmig profiliert ist und zumindest eine Öffnung (30) zum Hindurchführen des zumindest einen Halteabschnitts (19) des Befestigungselementes (18) aufweist.

9. Lösbare Verbindung nach den Ansprüchen 7 und 8, **dadurch gekennzeichnet, dass** die Führungsschiene (29) an einem der beiden zu verbindenden Bauteile (3, 4) vormontiert ist.

10. Lösbare Verbindung nach Anspruch 9, **dadurch gekennzeichnet, dass** die Führungsschiene (29) durch Klipsen, Punktschweißen oder dgl. an einem der beiden zu verbindenden Bauteile (3, 4) vormontiert ist.

11. Lösbare Verbindung nach einem der vorangegangenen Ansprüche, **dadurch gekennzeichnet, dass** die federnde Klammer (20) ein äußeres Rahmenteil (31) und einen inneren federnden Klemmbügel (32) umfasst, wobei der Klemmbügel (32) mit seinem einen Ende (33) mit dem äußeren Rahmenteil (31) verbunden ist.

12. Lösbare Verbindung nach Anspruch 11, **dadurch gekennzeichnet, dass** zwischen dem äußeren Rahmenteil (31) und dem federnden Klemmbügel (32) in der Draufsicht gesehen ein U-förmiger Freischnitt (35) vorgesehen ist.

13. Lösbare Verbindung nach Anspruch 11, **dadurch gekennzeichnet, dass** der Klemmbügel (32) in der Draufsicht gesehen etwa U-förmig ausgebildet ist und zwei langgestreckte, mit Abstand zueinander angeordnete schmale Stege (36, 37) umfasst, die an ihrem freien Ende über einen querverlaufenden Verbindungssteg (38) miteinander verbunden sind.

14. Lösbare Verbindung nach Anspruch 13, **dadurch gekennzeichnet, dass** die beiden beabstandeten Stege (36, 37) des Klemmbügels (32) abwechselnd Abstützbereiche (39, 40) für die Führungsschiene und die Rastnuten (24) aufweisen.

15. Lösbare Verbindung nach einem der vorangegangenen Ansprüche, **dadurch gekennzeichnet, dass** die federnde Klammer (20) benachbart des gemeinsamen Verbindungsbereiches von Rahmenteil (31) und Klemmbügel (32) einen abgestellten Einführbügel (34) aufweist.

16. Lösbare Verbindung nach Anspruch 15, **dadurch gekennzeichnet, dass** am äußeren Rahmenteil (31) auf der dem Einführbügel (34) abgekehrten Ende ein Wandabschnitt (41) mit einer Demontageöffnung (42) vorgesehen ist.
